**Europäisches Patentamt**

**European Patent Office**

**Office européen des brevets**

(19)

(11) Veröffentlichungsnummer: **0 161 527**
**A1**

(12) # EUROPÄISCHE PATENTANMELDUNG

(21) Anmeldenummer: 85104724.1

(22) Anmeldetag: 18.04.85

(51) Int. Cl.⁴: **H 02 M 7/515**

(30) Priorität: 21.04.84 DE 3415145

(43) Veröffentlichungstag der Anmeldung: 21.11.85
Patentblatt 85/47

(84) Benannte Vertragsstaaten: **AT CH DE FR GB IT LI NL SE**

(71) Anmelder: **MITEC Moderne Industrietechnik GmbH,
Daimlerstrasse 15, D-8012 Ottobrunn (DE)**

(72) Erfinder: **Mehnert, Walter, Dr. Dipl.-Ing.,
Grillparzerstrasse 6, D-8012 Ottobrunn (DE)**

(74) Vertreter: **Strasser, Wolfgang, Dipl.-Phys. et al,
Patentanwälte Strohschänk, Url & Strasser Innere
Wiener Strasse 8, D-8000 München 80 (DE)**

(54) **Wechselrichter.**

(57) Bei einem Wechselrichter zur Erzeugung der Spannungen eines Mehrphasensystems wurden durch steuerbare Schalter (31, 36, 39) Verbindungen zwischen jedem Phasenleiter (R, S, T) und den Anschlüssen (30, 34, 38) einer Gleichspannungsquellenanordnung geschlossen und geöffnet. An der Gleichspannungsquellenanordnung sind die Nullspannung, die Scheitelspannung und wenigstens eine erste zwischen diesen Spannungen liegende Zwischenspannung abgreifbar; jeder Phasenleiter wird zur treppenförmigen Annäherung einer Sinushalbwelle für eine erste Zeitspanne an die Nullspannung, für eine unmittelbar folgende zweite Zeitspanne an die Zwischenspannung, danach für eine dritte Zeitspanne an die Scheitelspannung, danach für eine vierte Zeitspanne an die erste Zwischenspannung und für eine unmittelbar folgende fünfte Zeitspanne an die Nullspannung angeschlossen, was mit wechselnden Spannungsvorzeichen wiederholt wird; damit bei einer aufgrund einer kapazitiven oder induktiven Belastung auftretenden Phasenverschiebung zwischen Strom und Spannung keine schädlichen Gegenströme in die Gleichspannungsquellenanordnung fließen, werden während der zweiten und der vierten Zeitspanne an den die erste Zwischenspannung liefernden Anschluß zwei Phasenleiter gleichzeitig angeschlossen.

EP 0 161 527 A1

Wechselrichter

Die Erfindung betrifft einen Wechselrichter zur Erzeugung
der Phasen eines Mehrphasensystems, bei dem mit Hilfe von
steuerbaren Schaltern Verbindungen zwischen jedem der
Phasenleiter und den Anschlüssen einer Gleichspannungsquellenanordnung periodisch geschlossen und geöffnet werden.

Derartige Wechselrichter werden z.B. als selbstständdige Stromversorgungen für elektrische Lasten verwendet,
die einen Mehrphasenstrom, insbesondere dreiphasigen
Drehstrom benötigen, wenn kein entsprechendes Netz zur
Verfügung steht. Der Wechselrichter umfaßt dann eine Steuereinheit, die ein frei laufende Zeitbasis aufweist, von der
die Schaltbefehlssignale für die steuerbaren Schalter so
abgeleitet werden, daß die verschiedenen Phasenleiter
zur Erzeugung einer Wechselspannung mit der gewünschten
Frequenz von beispielsweise 50 Hz oder 60 Hz mit der
erforderlichen Phasenlage periodisch an die verschiedenen Anschlüsse der Gleichspannungsquellenanordnung gelegt
und von diesen wieder getrennt werden.

Eine andere Einsatzmöglichkeit stellt die Verwendung als
Notstromaggregat dar, das die Versorgung eines Verbrauchers übernehmen soll, wenn das normalerweise zur Verfügung stehende Netz ausfällt und den benötigten Mehrphasenstrom nicht mehr zu liefern vermag. Dabei läuft
die oben erwähnte Zeitbasis zunächst nicht frei, sondern
ist mit der Netzspannung, die über Sensoren abgefragt
wird, so synchronisiert, daß das Notstromaggregat die
Versorgung der Last bei einem Netzausfall möglichst
unterbrechungsfrei übernehmen kann. Nach Ausfall des
Netzes muß auch hier die Zeitbasis selbsttätig weiterlaufen und für die richtige Frequenz und Phasenlage
der erzeugten Spannungen sorgen.

Es ist für diese Anwendungsfälle bekannt, als Gleichspannungsquellenanordnung beispielsweise einen Batterieblock zu verwenden, der im Prinzip nur zwei Anschlüsse
aufweist, an denen die maximale Scheitelspannung, z.B.
310 V abgreifbar ist. Die einzelnen Phasenleiter werden
mit Hilfe von Thyristoren im erforderlichen Zeittakt
mit wechselnder Polarität an diese 310 V gelegt und
wieder abgetrennt, so daß statt einer Sinuswelle ein
Rechtecksimpulszug entsteht, der im Bedarfsfall durch
Drosselelemente, Siebglieder oder Transformatoren abgerundet und an einen sinusförmigen Verlauf angeglichen
werden kann. Ein besonderes Problem entsteht bei einem
solchen Wechselrichter dann, wenn er zur Versorgung einer nicht rein ohmschen Last eingesetzt wird und es aufgrund von induktiver oder kapazitiver Belastung zu einer
Phasenverschiebung zwischen Strom und Spannung auf
den Phasenleitern kommt.Es treten dann während einer
jeder Periode Zeiträume auf, in denen Strom und Spannung entgegengesetzte Vorzeichen besitzen, so daß durch
die Gleichspannungsquellen ein Strom in Gegenrichtung,
bei Batterien also ein Ladestrom fließt. Dieser kurzperiodische Wechsel zwischen Lade- und Entladeströmen
ist insbesondere für Batterien schädlich und führt nicht
nur zu hohen Wärmeverlusten sondern verkürzt auch die
Lebensdauer beträchtlich. Es ist daher bekannt, Wechselrichter mit einer Vielzahl von Spulen und/oder Kondensatoren auszustatten und diese Elemente in Abhängigkeit davon, ob die Last in zunehmendem oder abnehmendem
Maße kapazitiv oder induktiv wird, zu- bzw. wegzuschalten, um die lastbedingte Phasenverschiebung zwischen
Strom und Spannung zu kompensieren.

Solche Anordnungen sind außerordentlich material- und
kostenaufwendig, haben einen großen Platzbedarf und
sind störanfällig.

Demgegenüber liegt der Erfindung die Aufgabe zugrunde, einen Wechselrichter der eingangs beschriebenen Art so weiterzubilden, daß Phasenverschiebungen zwischen Strom und Spannung zumindest so lange ohne schädliche Wirkungen für die Gleichspannungsquellen bleiben, so lange sie einen zulässigen maximalen Phasenwinkel nicht übersteigen.

Zur Lösung dieser Aufgabe sieht die Erfindung die im Anspruch 1 zusammengefaßten Merkmale vor.

Durch diese erfindungsgemäßen Maßnahmen wird um jeden Nulldurchgang des anzunähernden, idealen, sinusförmigen Spannungsverlaufes herum ein Phasenwinkelbereich geschaffen, in dem eine Phasenverschiebung zwischen Strom und Spannung sich auf die Gleichspannungsquellen nicht auswirken und diese nicht schädigen kann. Dieser Schutz- oder Sicherheitsbereich wird unmittelbar vor und nach einem jeden solchen Nulldurchgang dadurch erzeugt, daß jeder der Phasenleiter während der Zeitspannen $t_5$ und $t_1$ mit dem Nullpotential in Verbindung steht, so daß kein Strom in die Batterien fließen kann. Die beiden Zeitspannen $t_5$ und $t_1$ schließen unmittelbar aneinander an, d.h. der Endpunkt von $t_5$ fällt mit dem Anfangspunkt von $t_1$ zusammen. Gleichzeitig entspricht dieser Zeitpunkt dem Nulldurchgang der anzunähernden, idealen Sinuswelle. In der Zeitspanne $t_4$, die der Zeitspanne $t_5$ unmittelbar vorausgeht, und in der Zeitspanne $t_2$, die der Zeitspanne $t_1$ unmittelbar nachfolgt, liegt der jeweilige Phasenleiter an einer Zwischenspannung $U_{z1}$, die vorzugsweise 50% der Scheitelspannung $U_s$ beträgt. Betrachtet man eine positive Halbwelle, so kann bei einer entsprechend großen Phasenverschiebung z.B. ein der Spannung vorauseilender Strom während der ganzen Zeitspanne $t_2$ negative Werte besitzen, ob-

wohl die Spannung positiv ist. Während der Zeitspanne $t_4$
haben dagegen bei gleicher Phasenverschiebung Strom
und Spannung dasselbe Vorzeichen, d.h. bei einer positiven Spannungshalbwelle ist auch der Strom positiv
und durchläuft Werte in der Nähe seines Maximums. Legt
man nun gemäß der Erfindung an denselben Anschluß der
Gleichspannungsquellenanordnung während der entsprechenden
Zeiten immer gleichzeitig zwei Phasenleiter, von denen
der eine gerade die Zeitspanne $t_2$ und der andere die
Zeitspanne $t_4$ durchläuft, so wird die Gleichspannungsquellenanordnung nur mit dem Differenzstrom der beiden Phasenleiter belastet, der bei den hier angenommenen Bedingungen nicht negativ ist, da der positive Strom des
die Zeitspanne $t_4$ durchlaufenden Phasenleiters größer
oder wenigstens gleich dem negativen Strom des Phasenleiters ist, der gerade die Zeitspanne $t_2$ durchläuft.
Strom und Spannung haben somit in diesen Zeitspannen
ebenfalls kein unterschiedliches Vorzeichen und es kann
nicht zu einer unerwünschten Gegenstrombelastung der
Gleichspannungsquellen kommen, obwohl eine Phasenverschiebung zwischen Strom und Spannung vorhanden ist.

Dasselbe gilt auch für die negativen Halbwellen, nur
das hier der die Zeitspanne $t_2$ durchlaufende Phasenleiter den dem Betrag nach größeren Strom liefert.
Entsprechendes gilt auch für eine Phasenverschiebung,
bei der der Strom der Spannung nacheilt, nur daß hier
für die positive Halbwelle der Phasenleiter den
größeren Strom liefert, der jeweils gerade die Zeitspanne $t_2$ durchläuft, und für die negative Halbwelle
der Phasenleiter, der die Zeitspanne $t_4$ durchläuft.

Da die Zeitspannen $t_1$ und $t_2$ bzw. $t_4$ und $t_5$ unmittelbar
aneinander anschließen, d.h. das Ende der vorausgehenden Zeitspanne $t_1$ bzw. $t_4$ genau mit dem Anfang der nach-

folgenden Zeitspanne $t_2$ bzw. $t_5$ zusammenfällt und, wie bereits erwähnt, die Zeitspanne $t_1$ einer jeden Halbwelle unmittelbar an die Zeitspanne $t_5$ der vorausgehenden Halbwelle anschließt, wird um jeden Nulldurchgang der idealen Sinuswelle herum ein Sicherheitsbereich bzw. -zeitraum der Länge $t_4+t_5+t_1+t_2$ geschaffen, in welchem Phasenverschiebungen zwischen Strom und Spannung ohne schädliche Auswirkung auf die Gleichspannungsquellen auftreten können. Die Größe der maximal zulässigen Phasenverschiebung hängt dabei von der Länge dieses Zeitraums ab.

Bei einem bevorzugten Ausführungsbeispiel, bei dem für einen Dreiphasendrehstrom mit einer Winkelverschiebung von $120^\circ$ zwischen den Phasen die Zeitspannen $t_1$ und $t_5$ jeweils einem Phasenwinkel von $15^\circ$ und die Zeitspannen $t_2$ und $t_4$ jeweils einem Phasenwinkel von $30^\circ$ entsprechen, entspricht der Sicherheitszeitraum einem Phasenwinkel von $90^\circ$, so daß Phasenverschiebungen von $\pm 45^\circ$ zugelassen werden können, ohne daß Gegenströme fließen. Höhere Anforderungen hinsichtlich der maximal zulässigen Phasenverschiebung werden an Wechselrichter in der Regel nicht gestellt.

Für ein Mehrphasensystem mit mehr als drei, beispielsweise mit sechs Phasen, die jeweils um $60^\circ$ gegeneinander verschoben sind, läßt sich der Sicherheitszeitraum dadurch noch weiter vergrößern, daß man eine zweite Zwischenspannung $U_{Z2}$ an der Gleichspannungsquellenanordnung abgreifbar macht, die zwischen der ersten Zwischenspannung $U_{Z1}$ und der Scheitelspannung $U_S$ liegt. Während zweier weiterer Zeitspannen $t_6$ und $t_7$, von denen die erste unmittelbar an die Zeitspanne $t_2$ anschließt und die zweite unmittelbar der Zeitspanne $t_4$ vorausgeht, legt man den betrachteten Phasenleiter wieder gemeinsam mit einem anderen Phasenleiter gleichzeitig an diese

zweite Zwischenspannung $U_{72}$, wobei wieder gilt, daß der eine Phasenleiter gerade die Zeitspanne $t_6$ und der andere Phasenleiter die Zeitspanne $t_7$ durchläuft. Es ergibt sich dann wieder eine Kompensationswirkung zwischen positiven und negativen Strömen und es wird auch für diese Zeitspannen eine Gegenstrombelastung der Gleichspannungsquellen vermieden.

Die beiden weiteren Zeitspannen $t_6$ und $t_7$ können vorzugsweise jeweils einem Phasenwinkel von $30^O$ entsprechen, so daß der insgesamt erzielbare Sicherheitszeitraum $t_7 + t_4 + t_5 + t_1 + t_2 + t_6$ einem Phasenwinkel von $150^O$ entspricht; in diesem Fall können somit Phasenverschiebungen zwischen Strom und Spannung von $\pm 75^O$ ohne schädliche Einflüsse auf die Gleichspannungsquellen zugelassen werden.

Ein wesentlicher Vorteil des erfindungsgemäßen Wechselrichters gegenüber dem Stand der Technik besteht darin, daß er neben der in jedem Fall erforderlichen Steuereinheit nur die Gleichspannungsquellen und die steuerbaren Schalter umfaßt, d.h. die schädlichen Auswirkungen von Phasenverschiebungen zwischen Strom und Spannung in einem großen Phasenwinkelbereich vermeidet, ohne daß hierzu irgendwelche Kondensatoren oder Spulen vorgesehen und in Abhängigkeit von der Größe der momentan auftretenden Phasenverschiebung zu- oder abgeschaltet werden müssen.

Die Länge des Sicherheitszeitraums von $\pm 45^O$ bzw. $\pm 75^O$ ist dabei keine absolute Größe, sondern kann durch Änderung der Länge der Zeitspannen $t_1$, $t_2$, $t_4$ und $t_5$ bzw. $t_6$ und $t_7$ variiert werden. Die Grenzen dieser Variationsmöglichkeit hängen von den Anforderungen ab, die an die Genauigkeit gestellt werden, mit der durch die mit Hilfe der steuerbaren Schalter auf jeden Phasenleiter erzeugte treppenförmige Spannungskurve der idealen
Sinusform nahekommen soll.

Für den Fall, daß in dieser Hinsicht erhöhte Anforderungen
gestellt werden, ist gemäß der Erfindung auch für ein
Dreiphasensystem vorgesehen, daß die Zeitspanne $t_3$, in
der der jeweilige Phasenleiter an der Scheitelspannung $U_S$
liegt, nicht notwendigerweise unmittelbar an die vorausgehende Zeitspanne $t_2$ und die nachfolgende Zeitspanne
$t_4$ anschließen muß. Vorzugsweise ist auch hier die
Spannungsquellenanordnung so ausgebildet, daß an ihr
eine zweite Zwischenspannung $U_{Z2}$ abgreifbar ist, die zwischen
der ersten Zwischenspannung $U_{Z1}$ und der Scheitelspannung $U_S$
liegt. Es kann dann ebenfalls zwischen die Zeitspannen
$t_2$ und $t_3$ bzw. die Zeitspannen $t_3$ und $t_4$ eine Zeitspanne
$t_6$ bzw. $t_7$ eingeschoben werden, während derer der Phasenleiter jeweils allein an die zweite Zwischenspannung $U_{Z2}$ gelegt wird. Damit ergibt sich insbesondere in dem Bereich
einer Halbwelle, in dem die anzunähernde, ideale Sinusform in der Umgebung des Maximums sehr flach verläuft,
durch die erhöhte Anzahl von abzugreifenden Spannungen
eine vermehrte Zahl von Treppenstufen und somit ein geringerer Oberwellenanteil. In dieser Hinsicht ist der
vergleichsweise hohe Spannungssprung beim Übergang
von der Zeitspanne $t_1$ zur Zeitspanne $t_2$ und von $t_4$ nach
$t_5$ unkritisch, weil diese Übergänge in der Nähe des Nulldurchgangs der idealen Sinuskurve, d.h. in deren steilstem Bereich liegen.

Im Rahmen der Erfindung ist es erforderlichenfalls durchaus möglich, sowohl für ein Dreiphasensystem als auch
ein Mehrphasensystem höherer Ordnung eine dritte Zwischenspannung $U_{Z3}$ vorzusehen, die beispielsweise zwischen
der zweiten Zwischenspannung $U_{Z2}$ und der Scheitelspannung $U_S$
liegt, und die Phasenleiter während entsprechender zusätzlich eingeschobener Zeitspannen $t_8$, $t_9$ mit dieser dritten

Zwischenspannung $U_{Z3}$ zu verbinden.

In den Fällen, in denen nur zwei Zwischenspannungen abgegriffen werden sollen, ist es erfindungsgemäß möglich,
mit nur vier gleichsinnig miteinander in Reihe geschalteten Gleichspannungsquelleneinheiten auszukommen, von
denen jeweils zwei dieselbe Spannung liefern und die
symmetrisch zur Mitte der Reihenschaltung so angeordnet
sind, daß an den beiden außenliegenden Einheiten die
erste Zwischenspannung $U_{Z1}$ abgreifbar ist, während an
den beiden innenliegenden Einheiten eine Spannung abfällt, die bei Addition zur ersten Zwischenspannung $U_{Z1}$
die zweite Zwischenspannung $U_{Z2}$ ergibt. Um bei einer
solchen Anordnung auch die Scheitelspannung $U_S$ abgreifen
zu können, wird erfindungsgemäß das Nullpotential der
Reihenschaltung von der Mitte aus für bestimmte Zeitspannen nach oben und nach unten verschoben. Dies
wird im folgenden noch genauer beschrieben.

Hier ist von Bedeutung, daß bei dieser Anordnung, die
sich durch eine sehr gleichmäßige Strombelastung der
einzelnen Einheiten auszeichnet, die Spannungen der
Einheiten nicht mehr voneinander unabhängig gewählt
werden können. Es muß vielmehr die Bedingung $2 \cdot U_{Z2} =$
$U_S + U_{Z1}$ erfüllt sein. Wählt man nun $U_{Z1} = 1/2\ U_S$, was
für die Zeitspannen $t_2$ und $t_4$, während derer $U_{Z1}$ an
die jeweiligen Phasenleiter gelegt wird, genau dem
entsprechenden Wert der idealen Sinusform entspricht,
so ergibt sich für $U_{Z2}$ ein Wert von 75% der Scheitelspannung $U_S$. Die Zeitspannen $t_6$ und $t_7$, zu denen $U_{Z2}$
an den jeweiligen Phasenleiter gelegt wird, liegen
in einem zeitlichen Bereich, in dem die ideale Sinusform den Phasenwinkel $60^O$ durchläuft; hier sollte die
Spannung also 86,6% der Scheitelspannung $U_S$ betragen.
Der 75%-Wert für $U_{Z2}$, wie er sich bei der obigen Anordnung für $U_{Z1} = 1/2\ U_S$ ergibt, weicht davon merklich ab. Will man hier zu einer besseren Annäherung kommen, kann erfindungsgemäß $U_{Z1}$ etwas höher als 50% von $U_S$, beispielsweise gleich 56% von $U_S$ gewählt werden, woraus sich dann für $U_{Z2}$ ein Wert von 78% von $U_S$ ergibt. In Abhängigkeit von den Anforderungen hinsichtlich der in den Oberwellen enthaltenen Leistung läßt sich hier durch Variation der erfindungsgemäß zur Verfügung stehenden Parameter (Zahl und Länge der Zeitspannen, Zahl und Absolutwerte der abgreifbaren Spannungen) jeweils eine Optimierung der treppenförmigen Annäherung an den idealen Sinusverlauf in so starkem Ausmaß erzielen, daß weniger als 5%, typischerweise nur etwa 2% der von der Gleichspannungsquellenanordnung abgegebenen Leistung im Oberwellenbereich liegen.Es werden hierdurch selbst dann, wenn man zur weiteren Glättung aktive Sieb- oder Drosselglieder vorsieht, die hierdurch entstehenden Leistungsverluste außerordentlich gering gehalten, weil durch diese Zusatzschaltungen nur ein sehr kleiner Teil der Gesamtleistung beeinflußtwerden muß.

Ein weiterer Vorteil, der sich aus der treppenförmigen Annäherung des idealen Sinusverlaufs ergibt, besteht darin, daß der erfindungsgemäße Wechselrichter bei seiner Verwendung als Notstromaggregat die Versorgung der Last praktisch unterbrechungsfrei, d.h. mit einem Spannungswert übernehmen kann, der dem vom Netz zuletzt abgegebenen momentanen Spannungswert sehr nahe kommt.

Bei den bisherigen Überlegungen war immer nur eine Halbwelle betrachtet worden, die von den Zeitspannen $t_1$ bis $t_7$ (oder weiteren Zeitspannen) überdeckt wird. Gleiches gilt auch für die jeweils dieser Halbwelle vorausgehende und nachfolgende Halbwelle, die zu der betrachteten Halbwelle das entgegengesetzte Vorzeichen besitzen. Sie können erfindungsgemäß entweder dadurch erzeugt werden, daß die Gleichspannungsquellenanordnung
für jeden Spannungswert einen positiven und einen negativen Anschluß besitzt, wobei diese Anschlüsse dann
symmetrisch zum Nullpotential liegen, oder es können
nur Spannungsanschlüsse einer Polarität bezüglich des
Nullpotentials vorgesehen sein, aus denen dann mit Hilfe
von Umpolern die positiven und negativen Halbwellen
erzeugt werden.

Zwei weitere, besonders bevorzugte Möglichkeiten des Aufbaus der Gleichspannungsquellenanordnung sind in den Ansprüchen 13 mit 19 beschrieben. Diese Anordnungen besitzen
zwar für positive und negative Spannungswerte verschiedene
Anschlüsse, doch liegt hier das Nullpotential nicht fest
in der Mitte. Es wandert vielmehr in den verschiedenen Zeitspannen $t_1$ bis $t_7$ bzw. $t_1$ bis $t_9$ zwischen den Verbindungen
der Einheiten hin und her, was zur Folge hat, daß bei Verwendung eines Mittelpunktleiters dieser mit Hilfe eines
eigenen Schaltersatzes ebenfalls          an verschiedene
Anschlüsse der Gleichspannungsquellenanordnung gelegt
werden muß. Dafür ergibt sich für die aus vier fest miteinander verbundenen Einheiten bestehende Ausführungsform
der Vorteil einer äußerst gleichmäßigen Strombelastung
der vier Einheiten, die bei einer rein ohmschen Last
nur zwischen 75% und 100% des Nennstromes schwankt. Bei
kapazitiver oder induktiver Last werden diese Schwankungen zwar größer, doch kommt es nicht dazu, daß einzelne
Einheiten periodisch beispielsweise für die Dauer einer
der Zeitspannen $t_1$ bis $t_7$ völlig abgeschaltet sind. Dies
hat einerseits einen hohen Wirkungsgrad zur Folge, was
insbesondere dann wichtig ist, wenn als Spannungsquellen
Solarzellen eingesetzt werden. Darüberhinaus ergibt sich
bei Verwendung von Batterien der Vorteil, daß diese nicht
hochfrequent an- und abgeschaltet werden, was zu einer
Erwärmung aufgrund innerer Verluste führen und die Lebensdauer verkürzen würde.

0161527

Treten zu den vier Einheiten dieser Ausführungsform
gemäß einer anderen Variante beispielsweise noch zwei
Einheiten hinzu, die unmittelbar symmetrisch zum
Mittelpunkt der Reihenschaltung liegen und mit diesem
verbunden sind, so müssen diese beiden zusätzlichen
Einheiten mit Hilfe entsprechender, durch die Steuereinheit gesteuerter Schalter für gewisse Zeitspannen
einzeln oder gemeinsam aus der Reihenschaltung heraus-
oder in die Reihenschaltung eingeschaltet werden. Dies
bedeutet, daß diese beiden Einheiten nicht dieselbe
vorteilhafte gleichmäßige Strombelastung erfahren,
wie die vier äußeren Einheiten, doch lassen sich mit
ihrer Hilfe weitere Treppenstufen einfügen, die eine
noch glattere Annäherung an die ideale Sinusform ermöglichen.

Weiterhin ist bei diesem bevorzugten Aufbau der Gleichspannungsquellenanordnung kein Umpoler erforderlich. Zum
Schalten der drei Phasenleiter eines dreiphasigen Drehstromsystems und des einen Mittelpunktleiters werden
lediglich zwölf bzw. vierzehn Schalter benötigt.

Die Erfindung wird im folgenden anhand von Ausführungsbeispielen unter Bezugnahme auf die Zeichnung beschrieben;
in dieser zeigt:

Fig. 1          das schematische Blockschaltbild eines
                typischen Anwendungsfalles für einen
                Wechselrichter als Notstromaggregat,

Fig. 2          eine schematische Darstellung des
                erfindungsgemäßen Wechselrichters,

Fig. 3          einen sinusförmigen Spannungsverlauf
                auf einem der Phasenleiter mit den
                zu seiner treppenförmigen Annäherung

0161527

verwendeten Zeitspannen,

Fig. 4  den zeitlichen Verlauf der Verbindungen von drei Phasenleitern eines Drehstromsystems mit einer aus vier Einheiten bestehenden Gleichspannungsquellenanordnung sowie die daraus resultierende treppenförmige Annäherung der drei Phasen für die Zeitdauer einer Halbwelle,

Fig. 5  den idealen sinusförmigen Spannungsverlauf der drei Phasen eines Drehstromsystems sowie die treppenförmige Annäherung eines dieser Spannungsverläufe und den hierzu phasenverschobenen Strom für die Zeitdauer einer Vollwelle,

Fig. 6  den idealen sinusförmigen Spannungsverlauf für ein 6-Phasensystem, und

Fig. 7  eine der Fig. 4 entsprechende Darstellung für eine aus sechs Einheiten bestehende Gleichspannungsquellenanordnung.

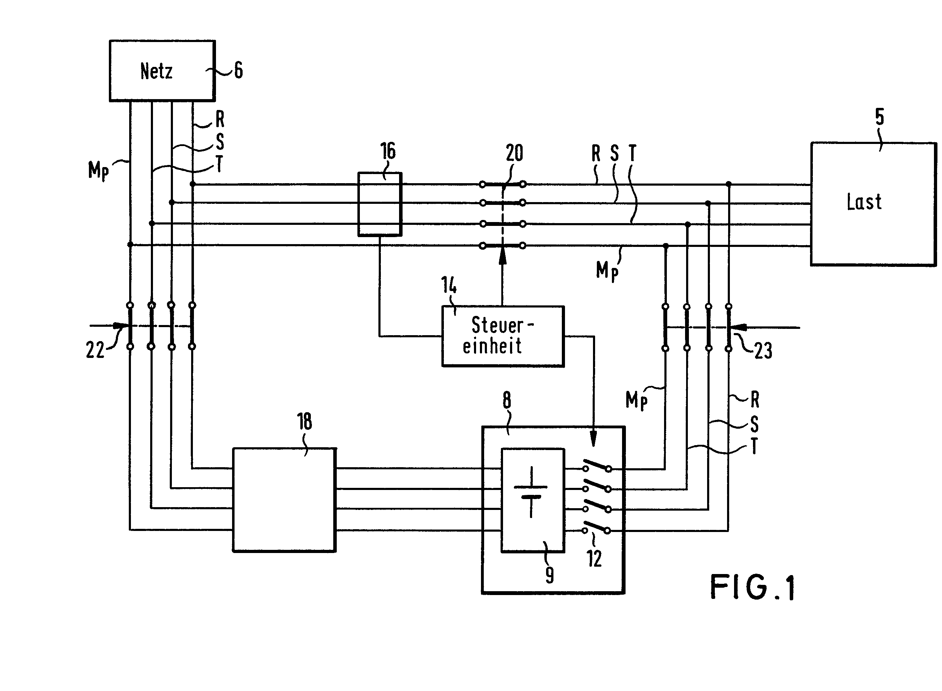

Gemäß Fig. 1 wird eine Last 5 von einem Dreiphasen-Drehstromsystem mit elektrischer Energie versorgt, dessen Phasenleiter R, S und T ebenso wie der Mittelpunktsleiter Mp mit einem Netz 6 in Verbindung stehen, aus dem das Dreiphasensystem normalerweise gespeist wird.

Um die Last 5 auch bei einem Ausfall des Netzes 6 weiterhin mit elektrischer Energie versorgen zu können, ist als Notstromaggregat ein Wechselrichter 8 vorgesehen, der eine Gleichspannungsquellenanordnung 9 sowie steuer-

- 13 -    0161527

bare Schalter 12 umfaßt, mit deren Hilfe der Mittelpunktsleiter Mp und die drei Phasenleiter R, S und T, die den
Wechselrichter 8 mit der Last 5 verbinden, an die Anschlüsse der Gleichspannungsquellenanordnung 9 gelegt
bzw. von diesen getrennt werden können. Die Befehlssignale für diese hier nur schematisch angedeuteten steuerbaren Schalter 12 kommen von einer Steuereinheit 14, die
dafür sorgt, daß die Wechselspannungen auf den Phasenleitern R, S und T einen angenähert sinusförmigen Verlauf,
die erforderliche Frequenz von beispielsweise 50 Hz oder
60 Hz sowie die richtige Phasenlage besitzen, d.h. bei
einem Dreiphasensystem um jeweils 120$^{\circ}$ gegeneinander
verschoben sind. Die Steuereinheit 14 erhält Eingangssignale von einer Sensoreinheit 16, mit deren Hilfe überwacht wird, ob das Netz 6 einwandfrei arbeitet und die
benötigte elektrische Energie liefert. Solange dies der
Fall ist, werden die von der Sensoreinheit 16 abgegebenen Signale lediglich dazu verwendet, eine in der Steuereinheit 14 laufende Zeitbasis mit der Netzfrequenz zu
synchronisieren. Die steuerbaren Schalter 12 bleiben in
diesem Zeitraum permanent geöffnet, so daß die Gleichspannungsquellenanordnung 9 unbelastet ist. Sie kann in
dieser Zeit mit Hilfe eines Gleichrichters 18 in der
erforderlichen Weise geladen werden, der seinerseits
aus dem Netz gespeist wird und einen die Netzspannung
stabilisierenden Spannungsregler umfassen kann.

Wenn die von der Sensoreinheit 16 gelieferten Signale
anzeigen, daß das Netz ausfällt, gibt die Steuerschaltung
14 die Befehlssignale für die steuerbaren Schalter 12
frei, sodaß diese ohne Unterbrechung, d.h. mit gleichbleibender Phasenlage und in etwa gleichbleibenden
Momentanspannungswerten beginnen, die Phasenleiter R,
S und T so mit den Anschlüssen der Gleichspannungsquellenanordnung 9 zu verbinden, daß die Energieversorgung der
Last 5 weiterhin sichergestellt ist. Gleichzeitig öffnet die Steuerschaltung 14 die steuerbaren Schalter 20, um
zu verhindern, daß Teile der vom Wechselrichter 8 abgegebenen elektrischen Leistung in das Netz 6 eingespeist
oder vom Gleichrichter 18 zur Aufladung der Gleichspannungsquellenanordnung 9 verwendet werden.

In den Verbindungsleitungen, die vom Netz 6 zum Gleichrichter 18 und vom Wechselrichter 8 zur Last 5 führen,
ist jeweils ein beispielsweise von Hand betätigbarer
Trennschalter 22 bzw. 23 vorgesehen, mit dessen Hilfe das
Notstromaggregat vom Netz und der Last für Wartungsarbeiten oder dergleichen getrennt werden kann. In Fig. 1 sind
diese Trennschalter ebenso wie die steuerbaren Schalter
20 geschlossen; es ist hier also der Betriebszustand dargestellt, in dem das Netz 6 die Last 5 mit elektrischer
Energie versorgt, während der Wechselrichter 8 im Bereitschaftszustand ist.

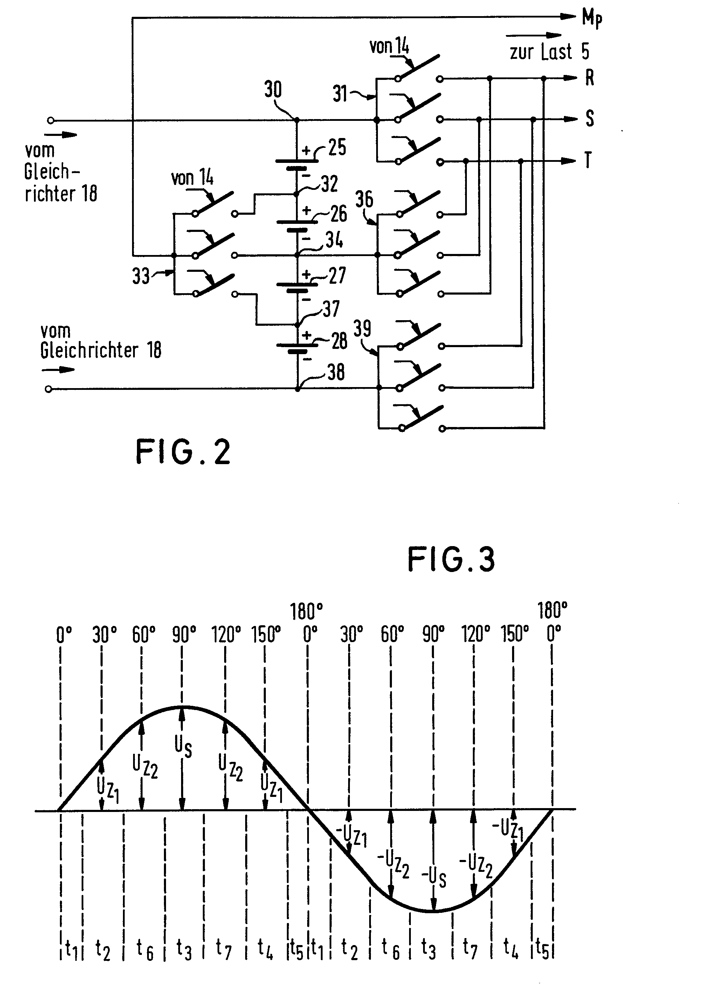

In Fig. 2 ist der erfindungsgemäße Aufbau des Wechselrichters 8 genauer dargestellt. Man sieht, daß die
Gleichspannungsquellenanordnung 9 aus vier Batterieblöcken 25, 26, 27 und 28 besteht, die miteinander gleichsinnig, d.h. so in Reihe geschaltet sind, daß jeweils
der Minusanschluß des einen Batterieblocks mit dem Plusanschluß des Nachbarbatterieblocks verbunden ist. An dem
in Fig. 2 oberen Ende der Reihenschaltung liegt der
Batterieblock 25, dessen Plusanschluß den positiven End-
Ausgangsanschluß 30 der Gleichspannungsquellenanordnung
9 bildet, der einerseits mit dem Gleichrichter 18 und
andererseits mit einer ersten Gruppe 31 von steuerbaren
Schaltern verbunden ist, mit deren Hilfe der positive
End-Ausgangsanschluß 30 mit den zur Last 5 führenden
Phasenleitern R, S und T verbunden werden kann.

Der Minusanschluß des Batterieblocks 25 ist mit dem Plusanschluß des Batterieblockes 26 verbunden und diese Verbindung ist mit einem weiteren Ausgangsanschluß 32 der Gleichspannungsquellenanordnung 9 verbunden, mit dem über einen steuerbaren Schalter einer zweiten Gruppe 33 der Mittelpunktsleiter Mp verbunden werden kann.

Der Minusanschluß des Batterieblockes 26 ist mit dem Plusanschluß des Batterieblockes 27 verbunden und diese Verbindung ist mit dem Mittelpunkts-Ausgangsanschluß 34 der Gleichspannungsquellenanordnung 9 verbunden, der einerseits über eine dritte Gruppe 36 von steuerbaren Schaltern mit den zur Last führenden Phasenleitern R, S, T und andererseits über einen Schalter der zweiten Gruppe 33 mit dem Mittelpunktsleiter Mp verbindbar ist.

Der Minusanschluß des Batterieblockes 27 ist mit dem Plusanschluß des Batterieblockes 28 verbunden und diese Verbindung ist mit einem Ausgangsanschluß 37 der Gleichspannungsquellenanordnung 9 verbunden, der über einen steuerbaren Schalter der zweiten Gruppe 33 mit dem Mittelpunktsleiter Mp verbindbar ist.

Der Minusanschluß des Batterieblocks 28, der am anderen Ende der Reihenschaltung liegt, bildet den negativen End-Ausgangsanschluß 38, der einerseits mit dem Gleichrichter 18 und andererseits mit einer vierten Gruppe 39 von steuerbaren Schaltern verbunden ist, über die er mit den Phasenleitern R, S, T verbunden werden kann.

Daß es sich bei den Schaltern der Gruppen 31, 33, 36
und 39 um steuerbare Schalter handelt, die ihre Befehlssignale von der Steuereinheit 14 erhalten, ist
durch die abgeknickten Pfeile symbolisch angedeutet.
Es stehen für diesen Anwendungsfall sehr schnelle Halbleiterschalter, beispielsweise Power-MOS-Schalter,
zur Verfügung, von denen zur Schaltung höherer Leistungen auch mehrere zueinander parallel betrieben werden
können. Dies ist in Fig. 2 nicht weiter dargestellt,
d.h., daß die in Fig. 2 gezeigten Schalter alle voneinander unabhängig angesteuert werden, wie dies weiter unten noch genauer beschrieben wird.

Fig. 3 zeigt eine Sinus-Vollwelle, wie sie auf jedem
der Phasenleiter zeitlich gegeneinander versetzt angenähert und periodisch mit der Frequenz des zu erzeugenden Wechselstroms wiederholt werden soll.

Zu diesem Zweck gibt die Steuereinheit 14 für jede
Halbwelle beispielsweise sieben Zeitspannen $t_1$ bis
$t_7$ vor, während derer der betreffende Phasenleiter
mit Hilfe der steuerbaren Schalter an verschiedene,
jeweils eine geeignete Spannung liefernde Ausgangsanschlüsse der Gleichspannungsquellenanordnung 9 gelegt
wird. Dabei wird die in Fig. 3 dargestellte ideale
Sinusform zwar nur treppenförmig angenähert, doch
wird der besseren Verständlichkeit wegen auf die
Nulldurchgänge und Phasenwinkel dieser idealen Sinuskurve Bezug genommen, wobei für die Zwecke dieser
Darstellung die Zählung des Phasenwinkels mit jedem
Nulldurchgang wieder von vorne beginnt, also nur bis
$180^{\circ}$ läuft.

Mit dem zur positiven Halbwelle führenden Nulldurchgang ganz links in Fig. 3 beginnt die erste Zeitspanne $t_1$, während derer der betreffende Phasenleiter an die Nullspannung gelegt wird. Diese erste Zeitspanne $t_1$ hat eine Länge, die einem Phasenwinkel von
$15^{\circ}$ entspricht. Während der unmittelbar auf die Zeitspanne $t_1$ folgenden Zeitspanne $t_2$, deren Länge einem
Phasenwinkel von $30^{\circ}$ entspricht, wird der Phasenleiter auf eine erste Zwischenspannung $U_{Z1}$ gelegt, die
beispielsweise 50% der Scheitelspannung $U_S$ beträgt;
diesen Wert durchläuft die ideale Sinusform bei einem Phasenwinkel von $30^{\circ}$, zu dem die Zeitspanne $t_2$
symmetrisch liegt. Während einer später folgenden
Zeitspanne $t_3$, deren Länge einem Phasenwinkel von $30^{\circ}$
entspricht, wird der Phasenleiter an die Scheitelspannung $U_S$ gelegt, was der Tatsache Rechnung trägt,
daß die ideale Sinuswelle in der Mitte dieser Zeitspanne beim Phasenwinkel $90^{\circ}$ diese Scheitelspannung
$U_S$ durchläuft. Im weiteren Verlauf durchläuft die
Sinuswelle beim Phasenwinkel $150^{\circ}$ wieder die erste
Zwischenspannung $U_{Z1}$, und während der zu diesem
Phasenwinkel symmetrischen Zeitspanne $t_4$ (Länge $30^{\circ}$)
wird der Phasenleiter an einen entsprechenden Anschluß der Gleichspannungsquellenanordnung 9 gelegt. Unmittelbar auf die Zeitspanne $t_4$ folgt dann die Zeitspanne $t_5$, die dem zur negativen Halbwelle führenden
Nulldurchgang der Sinuswelle unmittelbar vorausgeht
und deren Länge nur $15^{\circ}$ beträgt. Allerdings ergänzt
sie sich mit der unmittelbar nachfolgenden Zeitspanne
$t_1$ der negativen Halbwelle, die wiederum eine Länge

von $15^O$ aufweist, zu einem Zeitraum, dessen Länge insgesamt einem Phasenwinkel von $30^O$ entspricht und in dessen Mitte die ideale Sinuswelle die Nullspannung durchläuft, auf der der Phasenleiter während dieses Zeitraumes $t_5 + t_1$ gehalten wird.

Wenn an die Qualität der treppenförmigen Annäherung des tatsächlichen Spannungsverlaufes an die ideale Sinusform keine großen Anforderungen gestellt werden, können die Zeitspannen $t_2$, $t_3$ und $t_4$ bei einem Dreiphasensystem unmittelbar aneinander anschließen, wobei sich dann ihre zeitlichen Längen und Mittelpunkte gegenüber den oben angegebenen Werten etwas verschieben.

Zur Verringerung der im Oberwellenanteil enthaltenen Leistung werden jedoch vorzugsweise zwei weitere Zeitspannen $t_6$ und $t_7$ zwischen den Zeitspannen $t_2$ und $t_3$ bzw. $t_3$ und $t_4$ vorgesehen, während derer der Phasenleiter auf eine zweite Zwischenspannung $U_{Z2}$ gelegt wird, deren Wert beispielsweise 75% der Scheitelspannung $U_S$ oder, zu einer besseren Annäherung an den Sinus, 0,87% der Scheitelspannung betragen kann. Auch diese beiden weiteren Zeitspannen $t_6$ und $t_7$ haben eine Länge von $30^O$.

Somit wird also die positive Halbwelle des idealen Sinusverlaufes von den sieben Zeitspannen vollständig überdeckt und es ist zu jedem Zeitpunkt genau definiert, an welcher Spannung der betreffende Phasenleiter liegen muß. Erfindungsgemäß erzeugt die Steuereinheit 14 für jeden Phasenleiter die Zeitspannen $t_1$ bis $t_7$ gegeneinander versetzt aber so, daß die Schaltvorgänge, mit denen die Phasenleiter an andere Ausgangsanschlüsse der Gleichspannungsquellenanordnung 9 gelegt werden, gleichzeitig erfolgen.

In gleicher Weise, wie dies für die positive Halbwelle beschrieben wurde, wird auch die hierauf folgende negative Halbwelle von entsprechenden Zeitspannen $t_1$ bis $t_7$ überdeckt, während derer der betreffende Phasenleiter an Spannungen mit dem gleichen Betrag jedoch entgegengesetztem Vorzeichen wie bei der positiven Halbwelle gelegt wird. An die Zeitspanne $t_5$ der negativen Halbwelle schließt dann wieder eine Zeitspanne $t_1$ der nächsten positiven Halbwelle an.

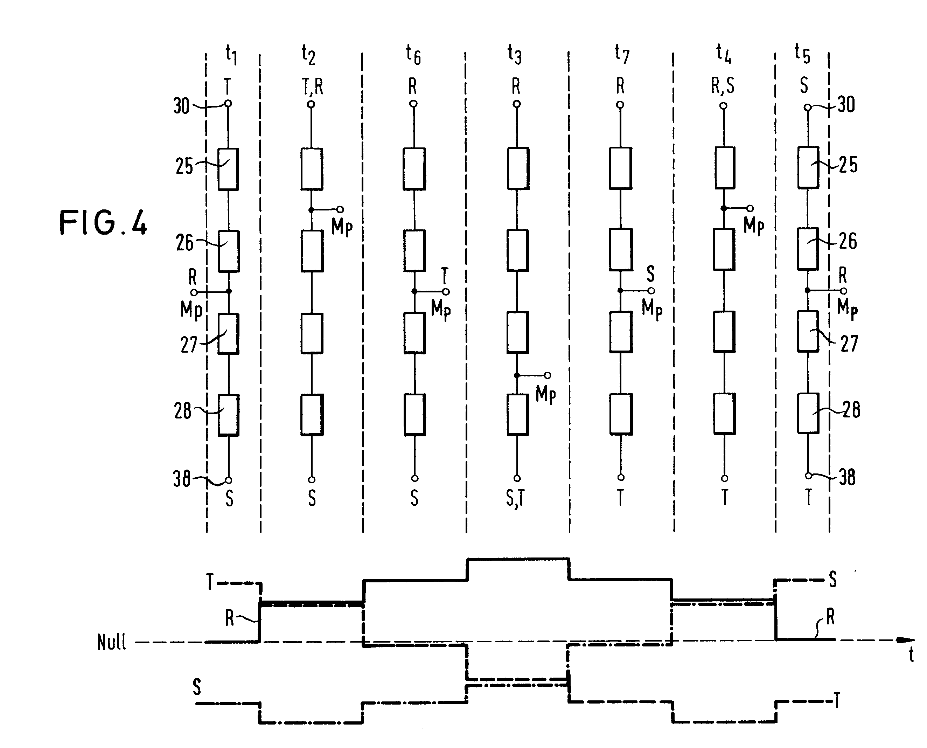

In Fig. 4 ist im oberen Bereich die Reihenschaltung der Batterieblöcke 25, 26, 27 und 28 für die oben beschriebenen Zeitspannen $t_1$ bis $t_7$ sieben mal dargestellt, wobei durch die Buchstaben an den Ausgangsanschlüssen angedeutet wird, mit welchem der Phasenleiter R, S, T der betreffende Ausgangsanschluß während der jeweiligen Zeitspanne in Verbindung steht. In gleicher Weise ist dargestellt, welcher Ausgangsanschluß jeweils mit dem Mittelpunktsleiter Mp verbunden ist.

Im unteren Bereich der Fig. 3 ist der sich aus diesen Verbindungen ergebende treppenförmige Spannungsverlauf einer positiven Halbwelle auf dem R-Phasenleiter mit durchgezogenen Linien dargestellt. Auf diese positive Halbwelle ist auch die Bezeichnung der Zeitspannen $t_1$ bis $t_7$ bezogen. Weiterhin sind jedoch in gestrichelten bzw. strichpunktierten Linien auch die sich gleichzeitig ergebenden Spannungsverläufe für die Phasenleiter S und T dargestellt.

In der in Fig. 4 ganz links liegenden Zeitspanne $t_1$ des R-Phasenleiters liegt dieser ebenso wie der Mittelpunktsleiter Mp am Mittelpunkts-Ausgangsanschluß 34 der Spannungsquellenanordnung 9 und somit auf Nullspannung.

Nun sind bei der hier dargestellten, bevorzugten Ausführungsform einer erfindungsgemäßen Spannungsquellenanordnung die Spannungen der Batterieblöcke so gewählt, daß sich die Spannungen der beiden oberen Batterieblöcke 25 und 26 ebenso wie die Spannungen der beiden unteren Batterieblöcke 27 und 28 jeweils zur zweiten Zwischenspannung $U_{Z2}$ addieren, die hier 75% der Scheitelspannung $U_S$ beträgt.

Wegen der $120^O$ betragenden Phasenverschiebung zwischen den Phasenleitern R, S, T durchläuft während der dargestellten Zeitspanne $t_1$ einer positiven Halbwelle des R-Phasenleiters der T-Phasenleiter eine Zeitspanne $t_7$ einer positiven Halbwelle und der S-Phasenleiter eine Zeitspanne $t_6$ einer negativen Halbwelle. Daher sind diese beiden Phasenleiter während der Zeitspanne $t_1$ des R-Phasenleiters mit dem positiven End-Ausgangsanschluß 30 bzw. dem unteren End-Ausgangsanschluß 38 der Gleichspannungsquellenanordnung 9 verbunden, die bezüglich der Nullspannung, an der der R-Phasenleiter und der Mittelpunktsleiter Mp liegen, die Spannungen $+U_{Z2}$ bzw. $-U_{Z2}$ abgeben.

Der dargestellten Zeitspanne $t_1$ des R-Phasenleiters geht, wie bereits erwähnt, eine Zeitspanne $t_5$ der vorausgehenden negativen Halbwelle voraus. Da der R-Phasenleiter ebenso wie der Mittelpunktsleiter Mp bereits zu Beginn dieser Zeitspanne $t_5$ mit der Nullspannung verbunden wurde, findet während des Übergangs von $t_5$ auf $t_1$ kein Schaltvorgang statt. Dies gilt auch für die Phasenleiter T und S, deren in Fig. 4 links nur halb dargestellten Zeitspannen $t_7$ und $t_6$ in Wirklichkeit um $15^O$ länger sind und zum Beginn von $t_1$ symmetrisch liegen.

An die eben beschriebene Zeitspanne $t_1$ des R-Phasenleiters schließt sich in Fig. 4 nach rechts die Zeitspanne
$t_2$ an, während derer der R-Phasenleiter an die Zwischenspannung $U_{Z1}$ gelegt werden muß.

Da die Gleichspannungsquellenanordnung 9 erfindungsgemäß
so aufgebaut ist, daß die beiden in der Reihenschaltung
außen liegenden Batterieblöcke 25 und 28 jeweils diese
Zwischenspannung $U_{Z1}$ abgeben, die hier 50% der Scheitelspannung $U_S$ beträgt, wird für die Zeitspanne $t_2$ der R-
Phasenleiter an den positiven End-Ausgangsanschluß 30
gelegt, während der Mittelpunktsleiter an den Ausgangsanschluß 32 gelegt wird, der mit der Verbindung zwischen dem
Batterieblock 25 und dem Batterieblock 26 verbunden ist.
Somit liegt also der R-Phasenleiter bezüglich des Mittelpunktleiters Mp auf der gewünschten Spannung $+ U_{Z1}$.

Während der Zeitspanne $t_2$ des R-Phasenleiters durchläuft
der T-Phasenleiter die Zeitspanne $t_4$ seiner positiven
Halbwelle, in der er mit der positiven ersten Zwischenspannung $+ U_{Z1}$ verbunden werden muß, und er kann daher
ebenfalls mit dem positiven End-Ausgangsanschluß 30 der
Reihenschaltung verbunden werden. Dies führt, wie weiter
unten nochmals erläutert wird, zu dem erfindungsgemäßen
Ausgleich der in den Phasenleitern T und R fließenden
Ströme, wenn aufgrund einer induktiven oder kapazitiven
Belastung eine Phasenverschiebung zwischen Strom und
Spannung auf jedem dieser Phasenleiter vorhanden ist.

Während der Zeitspanne $t_2$ des R-Phasenleiters durchläuft der S-Phasenleiter die Zeitspanne $t_3$ seiner negativen Halbwelle, während derer er an die negative
Scheitelspannung gelegt werden muß.

0161527

Zu diesem Zweck wird er mit dem negativen End-Ausgangsanschluß 38 der Reihenschaltung verbunden, an dem
gegenüber dem Mittelpunktsleiter Mp die negative Scheitelspannung anliegt, da jeder der beiden inneren Batterieblöcke 26, 27 eine Spannung abgibt, die gleich 25%
der Scheitelspannung $U_S$ ist.

An die Zeitspanne $t_2$ schließt sich die Zeitspanne $t_6$
des R-Phasenleiters an, während derer er an die zweite Zwischenspannung $U_{Z2}$ gelegt werden muß. Um dies zu
erreichen, bleibt der R-Phasenleiter mit dem positiven
End-Ausgangsanschluß 30 der Reihenschaltung verbunden,
und es wird lediglich der Mittelpunktsleiter Mp durch
Betätigung der entsprechenden Schalter an den Mittel-
punkts-Ausgangsanschluß 34 der Spannungsquellenanordnung
9 gelegt. Damit fällt zwischen dem R-Phasenleiter und
dem Mittelpunktsleiter Mp die Summenspannung der Batterieblöcke 25 und 26 ab, die, wie bereits erwähnt,
75% der Scheitelspannung $U_S$ beträgt und somit gleich
der zweiten Zwischenspannung $U_{Z2}$ ist. Während der Zeitspanne $t_6$ des R-Phasenleiters durchläuft der T-Phasenleiter zunächst die Zeitspanne $t_5$ seiner positiven
Halbwelle und dann die Zeitspanne $t_1$ der hieran unmittelbar anschließenden negativen Halbwelle. Er wird
daher während dieses gesamten Zeitraums mit dem Mittelpunkts-Ausgangsanschluß 34 der Spannungsquellenanordnung 9
verbunden, der während dieser Zeit die Nullspannung
liefert. Gleichzeitig durchläuft der S-Phasenleiter
die Zeitspanne $t_7$ seiner negativen Halbwelle während
derer er auf $-U_{Z2}$ gehalten werden muß. Dies geschieht
dadurch, daß er in dem betreffenden Zeitraum mit dem
negativen End-Ausgangsanschluß 38 der die Spannungsquellenanordnung 9 bildenden Reihenschaltung verbunden ist.

In der folgenden Zeitspanne $t_3$ des R-Phasenleiters muß dieser die positive Scheitelspannung $U_S$ aufweisen. Dies wird durch erreicht, daß er weiterhin mit dem positiven End-Ausgangsanschluß 30 der Reihenschaltung verbunden bleibt, während der Mittelpunktsleiter Mp mit dem Ausgangsanschluß 37 verbunden wird, der mit der Verbindung zwischen den beiden unteren Batterieblöcken 27 und 28 verbunden ist. Dadurch fällt zwischen Mp und R die gewünschte Spannung $+ U_S$ ab. Gleichzeitig durchläuft der T-Phasenleiter die Zeitspanne $t_2$ seiner negativen Halbwelle, in der er mit der negativen ersten Zwischenspannung $-U_{Z1}$ verbunden werden muß. Er wird daher an den negativen End-Ausgangsanschluß 38 der Reihenschaltung geschaltet, der gegenüber dem Mittelpunktsleiter eben diese erste negative Zwischenspannung aufweist. Der S-Phasenleiter durchläuft in dieser Zeit die Zeitspanne $t_4$ seiner negativen Halbwelle, in der er ebenfalls mit der negativen ersten Zwischenspannung $- U_{Z1}$ verbunden sein muß. Er kann daher ebenfalls an den negativen End-Ausgangsanschluß 38 gelegt werden, wodurch gegebenenfalls wieder eine Blindstrom-Kompensation erzielt wird.

Für die beiden nächsten Zeitspannen $t_7$ und $t_4$ des R-Phasenleiters bleibt dieser mit dem positiven End-Ausgangsanschluß 30 verbunden und der an ihm erforderliche treppenförmige Spannungsabfall wird dadurch erreicht, daß der Mittelpunktsleiter während der Zeitspanne $t_7$ an den Mittelpunkts-Ausgangsanschluß 34 und während der Zeitspanne $t_4$ an den Ausgangsanschluß 32 zwischen den beiden oberen Batterieblöcken 25 und 26 gelegt wird. Der S-Phasenleiter wird für die Zeitspanne $t_7$ des R-Phasenleiters ebenfalls an den Mittelpunkts-Ausgangsanschluß 34 gelegt, weil er in diesem Zeitraum seine Zeitspannen $t_5$ der negativen Halbwelle und $t_1$ der folgenden positiven Halbwelle durchläuft.

Der T-Phasenleiter bleibt für die Zeitspannen $t_7$ und $t_4$ des R-Phasenleiters am negativen End-Ausgangsanschluß 38 der Spannungsquellenanordnung, und erhält seine negativen Spannungen $- U_{Z2}$ bzw. $- U_S$ dadurch, daß der Mittelpunktsleiter in der Reihenschaltung nach oben verschoben wird.

In der in Fig. 4 ganz rechts dargestellten Zeitspanne $t_5$ des R-Phasenleiters liegt dieser wieder gemeinsam mit dem Mittelpunktsleiter Mp am Mittelpunkts-Ausgangsanschluß 34 und somit in der erforderlichen Weise auf Nullspannung, während der S-Phasenleiter und der T-Phasenleiter am oberen positiven bzw. unteren negativen End-Ausgangsanschluß 30 bzw. 38 bleiben und somit die positive bzw. negative erste Zwischenspannung $+ U_{Z1}$ bzw. $- U_{Z1}$ aufweisen.

An die dargestellte Zeitspanne $t_5$ der positiven Halbwelle des R-Phasenleiters schließt sich dann eine Zeitspanne $t_1$ der negativen Halbwelle an, in der der R-Phasenleiter ebenso wie der Mittelpunktsleiter Mp am Mittelpunktsausgangsanschluß 34 bleibt. Auch für den S-Phasenleiter und den T-Phasenleiter finden beim Übergang zu dieser nächsten Zeitspanne $t_1$ keine Schaltvorgänge statt. Für die weiterhin anschließenden Zeiträume finden dann dieselben Schaltvorgänge statt, wie sie eben beschrieben wurden, nur daß der R-Phasenleiter an der Reihenschaltung nicht nach oben sondern nach unten wandert und der S- und T-Phasenleiter miteinander vertauscht sind. Auch der Mittelpunktsleiter Mp geht zunächst an den Ausgangsanschluß 37 statt an den Ausgangsanschluß 32. Er setzt also die aus Fig. 4 erkennbare Wellenbewegung ohne Phasensprung fort.

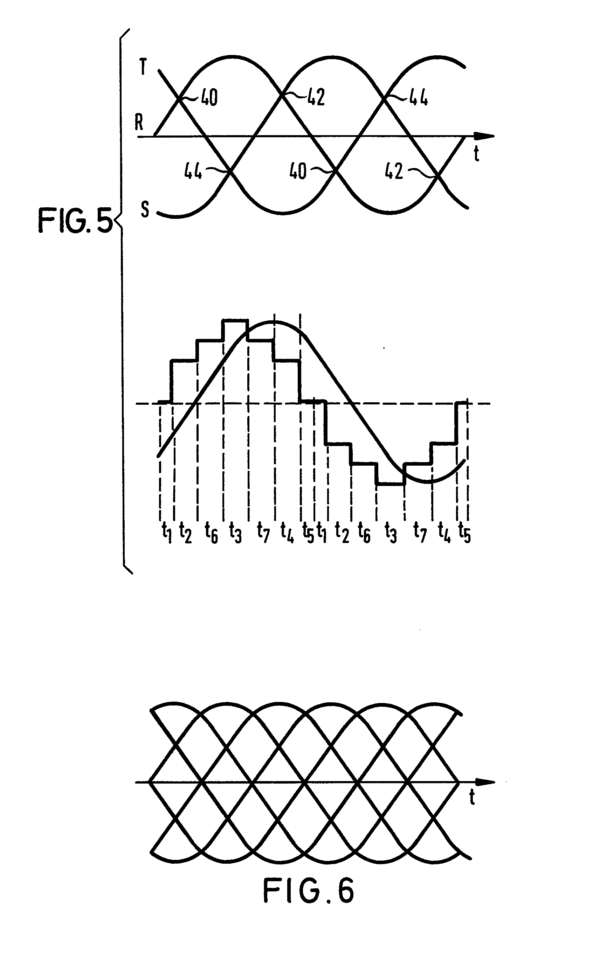

Im oberen Teil der Fig. 5 sind mit verkleinertem Zeitmaßstab noch einmal die idealen Sinusformen für die drei Phasenleiter R, S und T eines Dreiphasen-Drehstromsystems aufgezeichnet, wobei der R-Phasenleiter ganz links ebenso wie in Fig. 4 mit einem zur positiven Halbwelle führenden Nulldurchgang beginnt. Man entnimmt dieser Darstellung, daß für jede Halbwelle der Spannungsverlauf des R-Phasenleiters einen Schnittpunkt 40 mit dem Spannungsverlauf des T-Phasenleiters und einen Schnittpunkt 42 mit dem Spannungsverlauf des S-Phasenleiters aufweist. Zu diesen Zeitpunkten haben also die beiden betreffenden Phasenleiter einschließlich des Vorzeichens die gleiche Spannung und nur der Spannungsgradient ist verschieden. Dies wird erfindungsgemäß dazu ausgenützt, die beiden Phasenleiter während entsprechender Zeitspannen, die den Zeitpunkt dieses gegenseitigen Überschneidens umgeben, mit demselben Ausgangsanschluß der Spannungsquellenanordnung zu verbinden. Dies gilt sowohl für die positiven als auch die negativen Halbwellen und für die Schnittpunkte 44 der Spannungsverläufe auf dem S-Phasenleiter und dem T-Phasenleiter entsprechend.

Im unteren Teil der Fig. 5 ist synchron zum Spannungsverlauf des R-Phasenleiters der treppenförmige Spannungsverlauf wiedergegeben, wie er durch die oben beschriebenen Schaltvorgänge auf diesem Phasenleiter erzeugt wird. Gleichzeitig ist in den unteren Teil von Fig. 5 sinusförmig der Stromverlauf auf dem R-Phasenleiter eingezeichnet, wobei eine Vorauseilung um $45^{\circ}$ angenommen wurde. Man sieht, daß während der Zeitspanne $t_1$ der Strom auf dem R-Phasenleiter noch negative Werte besitzt, obwohl die Spannung Null ist. Dasselbe gilt für die in Fig. 5 nicht dargestellte der Zeitspanne $t_1$ vorausgehende Zeitspanne $t_5$ der vorausgehenden negativen Halbwelle des R-Phasenleiters. Dieser Zeitraum $t_5 + t_1$ ist jedoch unkritisch, weil der Phasenleiter hier mit dem Nullpotential verbunden ist und somit keine Gefahr besteht, daß ein Ladestrom in die Batterien fließt. In der an
die Zeitspanne $t_1$ anschließenden Zeitspanne $t_2$ ist dagegen die Spannung positiv, während der Strom noch immer
negativ ist. Hier würde es also ohne die erfindungsgemäßen Maßnahmen zum Auftreten eines Ladestroms kommen.
Da nun aber gemäß der Erfindung der R-Phasenleiter
nicht allein sondern gemeinsam mit dem T-Phasenleiter
an dem betreffenden Ausgangsanschluß der Spannungsquellenanordnung 9 liegt und der T-Phasenleiter zu dem betrachteten Zeitpunkt gerade die Zeitspanne $t_4$ durchläuft, fließt an diesem Ausgangsanschluß nicht nur
der Strom des R-Phasenleiters sondern der Differenzstrom aus den Strömen des R- und des T-Phasenleiters.
Wie man der Fig. 5 entnimmt, durchläuft der um $45^O$
vorauseilende Strom während der Zeitspanne $t_4$ gerade
sein positives Maximum. Dies ist zwar in Fig. 5 für
den R-Phasenleiter dargestellt, doch gilt Gleiches
auch für den T-Phasenleiter. Somit ist während
der Zeit, in der der R-Phasenleiter und der T-Phasenleiter gemeinsam am gleichen Ausgangsanschluß der Spannungsquellenanordnung 9 liegen, der positive Strom
des T-Phasenleiters dem Betrag nach größer als der
negative Strom des R-Phasenleiters, so daß der Differenzstrom positiv bleibt und dasselbe Vorzeichen
wie die in diesem Zeitraum positive Spannung besitzt. Somit wird die Spannungsquellenanordnung 9
während des Zeitraums $t_2$ nicht mit einem Gegen- bzw.
Ladestrom belastet. Da dasselbe auch für die Zeitspanne $t_4$ der positiven Halbwellen und die Zeitspannen $t_2$ und $t_4$ der negativen Halbwellen gilt, wird
also um jeden Nulldurchgang der idealen Sinuskurve
herum ein Zeitraum $t_4 + t_5 + t_1 + t_2$ geschaffen, in
welchem eine Phasenvor- oder -nacheilung des Stroms
gegenüber der Spannung keinen schädlichen Einfluß
auf die Spannungsquellenanordnung ausüben kann. Innerhalb dieses Zeitraumes können also derartige Phasenverschiebungen zugelassen werden. Die maximal zulässige Phasenverschiebung zwischen Strom und Spannung
bestimmt sich aus der Länge dieses Zeitraumes,
die bei den oben beschriebenen Beispielen einem Phasenwinkel von $90^O$ entspricht, so daß Phasenverschiebungen
von $\pm 45^O$ zugelassen werden können.

In Fig. 6 sind die idealisierten
Spannungsverläufe eines 6-Phasen-Drehstromsystems
wiedergegeben. Man sieht, daß hier die Spannung eines
jeden Phasenleiters pro Halbwelle vier Schnittpunkte
mit den Spannungsverläufen anderer Phasenleiter aufweist. Es läßt sich also das oben beschriebene Verfahren der Blindstromkompensation je Halbwelle nicht
nur zweimal sondern viermal dadurch anwenden, daß auch
während der Zeitspannen $t_6$ und $t_7$ jeweils zwei Phasenleiter an einen gemeinsamen Ausgangsanschluß einer
Gleichspannungsquellenanordnung gelegt werden. Dadurch
vergrößert sich der um jeden Nulldurchgang herum entstehende Sicherheitszeitraum auf nahezu das Doppelte,
so daß Phasenverschiebungen bis zu $\pm 75\%$ zugelassen werden können.

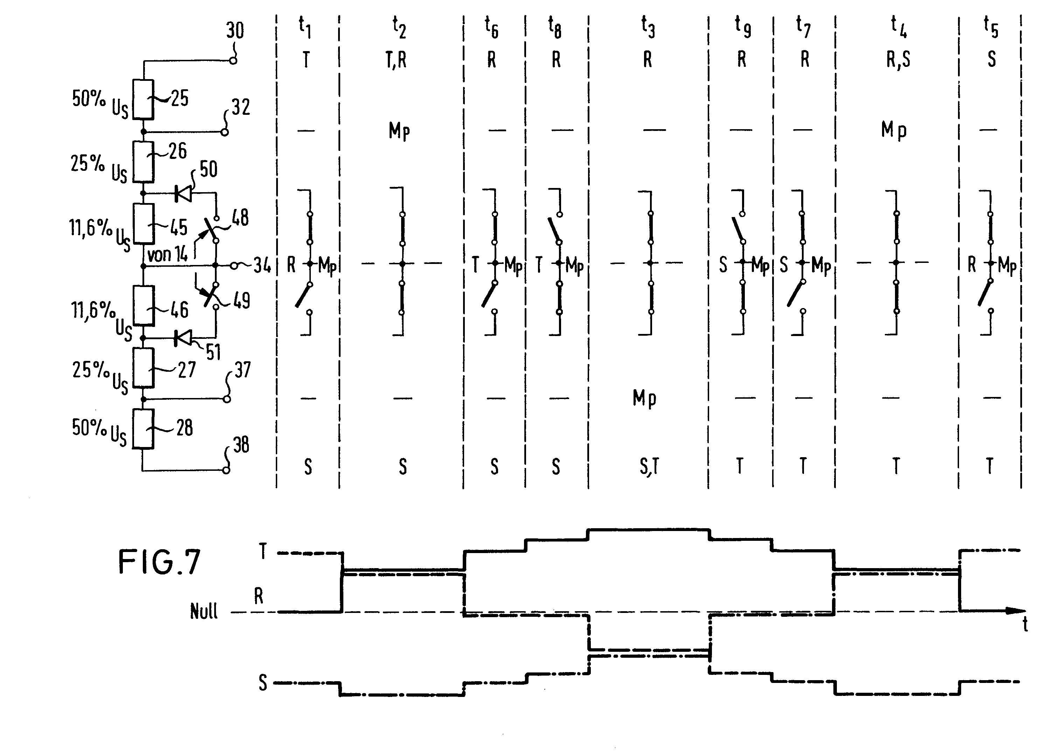

Fig. 7 zeigt eine der Fig. 4 ähnliche Darstellung für
eine modifizierte Gleichspannungsquellenanordnung, die
hier allerdings nur einmal wiedergegeben ist, während
in den Spalten für die Zeitspannen $t_1$ bis $t_9$ mit einem
etwas gedehnten Zeitmaßstab die Anschlußbelegungen
sowie die Stellungen der hier zusätzlich zur Verwendung kommenden Schalter 48, 49 wiedergegeben sind.

Der untere Bereich der Fig. 7 zeigt wieder den auf diese
Weise erzielbaren Spannungsverlauf auf den drei Phasenleitern R, S und T eines Drei-Phasensystems.

Die Gleichspannungsquellenanordnung der Fig. 7 unterscheidet sich von der in Fig. 4 dadurch, daß zwischen die beiden inneren Batterieblöcke 26, 27 symmetrisch zum Mittelpunkt der Anordnung zwei weitere Batterieblöcke 45, 46 eingefügt sind. Gemäß einem Prinzip der Erfindung sind auch hier die Spannungen der verschiedenen Batterieblöcke so gewählt, daß die zu den Enden der Reihenschaltung hin außenliegenden Batterieblöcke 25, 28 jeweils die höchste Spannung abgeben, die gleich $U_{Z1}$ ist und hier 50% der Scheitelspannung $U_S$ beträgt. Daran schließen sich nach innen hin die beiden Batterieblöcke 26, 27 an, die 25% der Scheitelspannung $U_S$ abgeben, und deren Spannung bei Addition zur Spannung der Batterieblöcke 25, 28 die zweite Zwischenspannung $U_{Z2}$ ergibt. Die beiden innersten Batterieblöcke 45, 46 besitzen hier eine Spannung die gleich 11,6% der Scheitelspannung $U_S$ ist und bei Addition zu den beiden anderen Spannungen eine dritte Zwischenspannung $U_{Z3}$ ergibt.

Diese Anordnung dient dazu, um in dem die Scheitelspannung umgebenden Bereich, in welchem die Sinusfunktion relativ flach verläuft, eine weitere Treppenstufe einzuführen und somit eine glattere Annäherung an den idealen Sinusverlauf zu erzielen. Zu diesem Zweck wird jede Sinushalbwelle nicht von sieben, sondern von neun Zeitspannen $t_1$ bis $t_9$ überspannt, wobei die beiden zusätzlichen Zeitspannen $t_8$ und $t_9$ zwischen die bereits beschriebenen Zeitspannen $t_6$ und $t_3$ bzw. $t_3$ und $t_7$ eingeschoben werden. Die Zeitspannen $t_6$ und $t_7$ werden zu diesem Zweck halbiert, so daß sie nur noch einem Phasenwinkel von $15^{\circ}$ entsprechen.

Allerdings kann bei dieser Anordnung nicht mehr eine unveränderbare Reihenschaltung aller Einheiten 25, 26, 45, 46, 27, 28 aufrechterhalten werden. Vielmehr ist es erforderlich, die beiden inneren Einheiten 45, 46 in die Reihenschaltung hinein- bzw. aus ihr herauszuschalten.

Zu diesem Zweck kann jede dieser beiden Einheiten 45, 46
durch einen zu ihr parallel liegenden, steuerbaren Schalter
48, 49 spannungsmäßig kurzgeschlossen werden. Um das
Fließen eines hohen Kurzschlußstromes zu vermeiden, sind
mit den Schaltern 48, 49 entsprechend gepolte Dioden 50,
51 in Reihe geschaltet.

Da die Anschlußbelegung für die Phasenleiter R, S und T
sowie für den Mittelpunktsleiter Mp dieselbe ist, wie
bei dem in Fig. 4 dargestellten Ausführungsbeispiel kann
auf eine nochmalige Beschreibung verzichtet werden. Es
werden im folgenden lediglich die Schaltzustände der
steuerbaren Schalter 48, 49 während der einzelnen Zeitspannen $t_1$ usw. beschrieben.

In Fig. 7 links ist wieder die Zeitspanne $t_1$ dargestellt,
während derer der R-Phasenleiter auf Nullpotential liegt
und daher ebenso wie der Mittelpunktsleiter Mp mit dem
Mitten-Ausgangsanschluß 34 verbunden ist. Der Phasenleiter
T durchläuft zu diesem Zeitraum seine Zeitspanne $t_7$ und
muß daher auf 75% der Scheitelspannung $U_S$ liegen. Er ist
mit dem positiven End-Ausgangsanschluß 30 verbunden, der
gegenüber dem Mittelpunktsleiter Mp allerdings 86,6%
der Scheitelspannung $U_S$ liefern würde, wenn nicht der
steuerbare Schalter 48 geschlossen wäre. Da dieser Schalter aber geschlossen ist, liegt an T die gewünschte
Spannung.

Der Phasenleiter S durchläuft in diesem Zeitraum die Zeitspanne $t_8$, in der es erwünscht ist, an ihn eine Spannung
zu legen, die größer als 75% von $U_S$ ist, weil diese Zeitspanne dem Durchlaufen der Scheitelspannung $U_S$ unmittelbar vorausgeht. Der Phasenleiter S ist während der Zeitspanne $t_1$ des Phasenleiters R mit dem negativen End-
Ausgangsanschluß 38 der Reihenschaltung verbunden, und
da in dieser Zeitspanne der Schalter 49 geöffnet ist, liegt an diesem End-Ausgangsanschluß 38 die Summe der
Spannungen der Einheiten 46, 27, 28 an, d.h. 86,6% der
Scheitelspannung $U_S$, was dem tatsächlichen Sinuswert
bei einem Phasenwinkel von 60$^o$ entspricht.

In der folgenden Zeitspanne $t_2$ liegen die Phasenleiter
T und R am positiven End-Ausgangsanschluß 30 und besitzen
gegenüber dem auf den Ausgangsanschluß 32 gelegten
Mittelpunktsleiter Mp die gewünschte Spannung von 50%
der Scheitelspannung $U_S$. Der Phasenleiter S soll in
dieser Zeitspanne $t_2$ sein negatives Maximum durchlaufen,
d.h. gegenüber dem Mittelpunktsleiter Mp die negative
Scheitelspannung - $U_S$ besitzen. Um dies zu erreichen,
sind die beiden inneren Batterieblöcke 45, 46 durch
Schließen der Schalter 48, 49 kurzgeschlossen, d.h. aus
der Reihenschaltung herausgeschaltet. In der folgenden
Zeitspanne $t_6$ soll der am positiven End-Ausgangsanschluß
30 bleibende Phasenleiter R gegenüber dem an den Mittelpunktsanschluß 34 gelegten Mittelpunktsleiter Mp eine
Spannung besitzen, die gleich 75% von $U_S$ ist. Daher ist
der obere Schalter 48 geschlossen, um den Batterieblock
45 kurzzuschließen. Der Phasenleiter S, der weiterhin
mit dem negativen End-Ausgangsanschluß 38 verbunden ist,
durchläuft während dieses Zeitraums seine Zeitspanne $t_9$,
während derer er an der dritten Zwischenspannung $U_{Z3}$
liegen soll. Daher ist der untere Schalter 49 geöffnet,
so daß zwischen dem Phasenleiter S und dem Mittelpunktsleiter Mp die Summenspannung aller drei unteren Batterieblöcke 46, 27, 28 abfällt. Während der folgenden Zeitspanne $t_8$ soll dann der R-Phasenleiter auf die dritte
Zwischenspannung $U_{Z3}$ gelegt werden. Er bleibt daher am
positiven End-Ausgangsanschluß 30 und es wird der obere
Schalter 48 geöffnet, so daß sich gegenüber dem am Mittelpunktsanschluß 34 bleibenden Mittelpunktsleiter Mp die
gewünschte Spannung ergibt.Der S-Phasenleiter durchläuft
in diesem Zeitraum seine Zeitspanne $t_7$, in der er auf die zweite Zwischenspannung $U_{Z2}$ gelegt werden soll. Er
bleibt hierzu mit dem negativen End-Ausgangsanschluß 38
verbunden und es wird lediglich der Schalter 49 geschlossen, so daß sich die Spannung des Batterieblocks
46 nicht mehr zu der der Batterieblöcke 27 und 28 addiert.

In der sich anschließenden Zeitspanne $t_3$ des R-Phasenleiters sind die beiden Schalter 48, 49 geschlossen,
da die benötigten Spannungen von den vier äußeren Batterieblöcken 25, 26 und 27, 28 geliefert werden. Zur Zeitspanne $t_9$ ist der obere Schalter 48 geöffnet, um den
R-Phasenleiter auf die dritte Zwischenspannung $U_{Z3}$ zu
legen. In der Zeitspanne $t_7$ ist der Schalter 48 geschlossen, da der R-Phasenleiter auf die zweite Zwischenspannung $U_{Z2}$ gelegt werden muß. Gleichzeitig ist der
Schalter 49 geöffnet, um den T-Phasenleiter auf die
negative dritte Zwischenspannung $- U_{Z3}$ zu legen. Während
der Zeitspanne $t_4$ des R-Phasenleiters sind die beiden
Schalter 48, 49 geschlossen, weil die benötigten Spannungen
von den vier äußeren Batterieblöcken 25, 26 und 27, 28
geliefert werden. In der Zeitspanne $t_5$ des R-Phasenleiters
ist schließlich der Schalter 48 geschlossen und der Schalter 49 geöffnet, um den Phasenleitern S und T, die zu
diesem Zeitpunkten an den End-Ausgangsanschlüssen 30 bzw.
38 liegen, die richtigen Spannungen zu vermitteln.

Mit dieser Ausführungsform wird also eine zusätzliche
Abstufung der treppenförmigen Spannung auf jedem der
drei Phasenleiter in dem Bereich erreicht, in welchem
auch der anzunähernde Sinus einen vergleichsweise flachen
Verlauf besitzt. Allerdings wird hier die anzustrebende
gleichmäßige Strombelastung der Batterieblöcke nur noch
für die vier äußeren Batterieblöcke 25, 26 und 27, 28
erreicht, während die beiden inneren Batterieblöcke
45, 46 für bestimmte Zeiten voll weggeschaltet bzw. zugeschaltet werden müssen.

0161527

In Abhängigkeit von den Erfordernissen eines konkreten Anwendungsfalles kann hier also zwischen verbesserter Annäherung der idealen Sinusform und einer möglichst gleichmäßigen Strombelastung der Gleichspannungsquellen optimiert werden. Im Rahmen der Erfindung können zu diesem Zweck auch noch weitere Zwischenspannungen eingeführt werden, die während zusätzlicher Zeitspannen t an die Phasenleiter gelegt werden.

Abschließend sei nochmals darauf hingewiesen, daß ein erfindungsgemäßer Wechselrichter nicht nur als Notstromaggregat, sondern auch als selbständige Strom- und Spannungsquelle überall dort eingesetzt werden kann, wo für eine Last ein entsprechendes Mehrphasen-Netz nicht zur Verfügung steht.

0161527

Patentansprüche

1. Wechselrichter zur Erzeugung der Spannungen eines Mehrphasensystems, bei dem mit Hilfe von steuerbaren Schaltern Verbindungen zwischen jedem der Phasenleiter und
den Anschlüssen einer Gleichspannungsquellenanordnung
geschlossen und geöffnet werden, dadurch g e k e n n -
z e i c h n e t , daß an der Gleichspannungsquellenanordnung (9) die Nullspannung, die Scheitelspannung
$(U_S)$ und wenigstens eine erste, zwischen diesen beiden
Werten liegende Zwischenspannung $(U_{Z1})$ abgreifbar sind,
daß jeder der Phasenleiter zur treppenförmigen
Annäherung einer Halbwelle eines sinusförmigen
Spannungsverlaufes für eine erste Zeitspanne $t_1$
an die Nullspannung, für eine unmittelbar hierauf
folgende zweite Zeitspanne $t_2$ an die Zwischenspannung $(U_{Z1})$, danach für eine dritte Zeitspanne $t_3$
an die Scheitelspannung $(U_S)$, danach für eine vierte
Zeitspanne $t_4$ an die erste Zwischenspannung $(U_{Z1})$
und für eine hierauf unmittelbar folgende fünfte
Zeitspanne $t_5$ an die Nullspannung anschließbar ist,
wobei diese Folge mit wechselndem Spannungsvorzeichen
mit der doppelten Frequenz des zu erzeugenden Mehrphasenstroms wiederholt wird, und daß während der
zweiten Zeitspanne $t_2$ und der vierten Zeitspanne $t_4$
an den die erste Zwischenspannung $(U_{Z1})$ liefernden
Anschluß jeweils zwei Phasenleiter gleichzeitig angeschlossen sind, von denen der eine den ansteigenden
Teil und der andere den fallenden Teil einer Halbwelle
gleichen Vorzeichens durchläuft.

2. Wechselrichter nach Anspruch 1, dadurch g e k e n n - z e i c h n e t , daß die erste Zwischenspannung ($U_{Z1}$) zwischen 40% und 60% der Scheitelspannung ($U_S$), insbesondere 50% der Scheitelspannung ($U_S$) beträgt.

3. Wechselrichter nach einem der Ansprüche 1 oder 2, dadurch g e k e n n z e i c h n e t , daß jeder Phasenleiter für eine sechste Zeitspanne $t_6$ und eine siebte Zeitspanne $t_7$ an eine zweite Zwischenspannung ($U_{Z2}$) anschließbar ist, die zwischen der ersten Zwischenspannung ($U_{Z1}$) und der Scheitelspannung ($U_S$) liegt, wobei die sechste Zeitspanne $t_6$ zwischen der zweiten Zeitspanne $t_2$ und der dritten Zeitspanne $t_3$ und die siebte Zeitspanne $t_7$ zwischen der dritten Zeitspanne $t_3$ und der vierten Zeitspanne $t_4$ liegt.

4. Wechselrichter nach Anspruch 3, dadurch g e - k e n n z e i c h n e t , daß alle sieben Zeitspannen $t_1$ bis $t_7$ unmittelbar aufeinanderfolgend die Zeitdauer einer Halbwelle überdecken.

5. Wechselrichter nach Anspruch 3 oder 4, dadurch g e k e n n z e i c h n e t , daß die zweite Zwischenspannung ($U_{Z2}$) zwischen 60% und 95% der Scheitelspannung ($U_S$), insbesondere 75% der Scheitelspannung ($U_S$) beträgt.

6. Wechselrichter nach einem der vorhergehenden Ansprüche, dadurch g e k e n n z e i c h n e t , daß die erste Zeitspanne $t_1$ und die fünfte Zeitspanne $t_5$ jeweils einem Phasenwinkel zwischen $10^O$ und $20^O$, insbesondere einem Phasenwinkel von $15^O$, und die zweite Zeitspanne $t_2$ und die vierte Zeitspanne $t_4$ jeweils einem Phasenwinkel zwischen $25^O$ und $35^O$, insbesondere einem Phasenwinkel von $30^O$ entsprechen.

7. Wechselrichter nach einem der Ansprüche 1 bis 6, dadurch g e k e n n z e i c h n e t , daß das

Mehrphasensystem ein Drehstromsystem mit drei Phasen ist, die jeweils um 120$^{\circ}$ gegeneinander verschoben sind.

8. Wechselrichter nach einem der Ansprüche 1 bis 6, dadurch g e k e n n z e i c h n e t , daß das Mehrphasensystem ein Drehstromsystem mit mehr als drei Phasen ist.

9. Wechselrichter nach einem der Ansprüche 3 bis 6 und Anspruch 8 , dadurch g e k e n n z e i c h n e t , daß das Mehrphasensystem ein Drehstromsystem mit sechs Phasen ist, die jeweils gegeneinander um 60$^{\circ}$ verschoben sind, und daß während der sechsten Zeitspanne $t_6$ und der siebten Zeitspanne $t_7$ an den die zweite Zwischenspannung ($U_{Z2}$) liefernden Anschluß jeweils zwei Phasenleiter gleichzeitig angeschlossen sind, von denen der eine gerade den ansteigenden Teil und der andere den fallenden Teil einer Halbwelle gleichen Vorzeichens durchläuft.

10. Wechselrichter nach einem der Ansprüche 1 bis 9, dadurch g e k e n n z e i c h n e t , daß die Gleichspannungsquellenanordnung (9) eine Reihenschaltung mehrerer, gleichsinnig miteinander verbundener Einheiten (25, 26, 27, 28; 25, 26, 45, 46, 27, 28) ist und daß die Phasenleiter (R, S, T) durch die steuerbaren Schalter (12; 31, 36, 39) wahlweise mit den außenliegenden End-Ausgangsanschlüssen (30, 38) sowie mit Zwischen-Ausgangsanschlüssen (32, 34, 37) der Reihenschaltung verbindbar sind.

11. Wechselrichter nach Anspruch 10, dadurch g e k e n n - z e i c h n e t , daß die beiden in der Reihenschaltung außenliegenden Einheiten (25, 28) jeweils die erste Zwischenspannung ($U_{Z1}$) und die beiden sich hieran nach innen anschließenden Einheiten (26, 27)
eine Spannung abgeben, die bei Addition mit der
ersten Zwischenspannung ($U_{Z1}$) die zweite Zwischenspannung ($U_{Z2}$) ergibt, daß diese wenigstens vier
Einheiten (25, 26, 27, 28) symmetrisch zum Mittelpunkt der Reihenschaltung angeordnet sind, und daß
die Phasenleiter (R, S, T) durch die steuerbaren
Schalter (12; 31, 36, 39) mit dem positiven bzw.
negativen End-Ausgangsanschluß (30, 38) der Reihenschaltung und einem mit dem Mittelpunkt der Reihenschaltung verbundenen Mittelpunktsausgangsanschluß
(34) verbindbar sind.

12. Wechselrichter nach Anspruch 11, dadurch g e -
    k e n n z e i c h n e t , daß die Reihenschaltung vier
       fest miteinander verbundene Einheiten (25, 26,
    27, 28) umfaßt.

13. Wechselrichter nach Anspruch 11, dadurch g e -
    k e n n z e i c h n e t , daß die Reihenschaltung
       sechs Einheiten (25, 26, 45, 46, 27, 28) umfaßt, von denen die beiden innersten Einheiten
    (45, 46) eine Spannung abgeben, die bei Addition
    zur zweiten Zwischenspannung ($U_{Z2}$) eine dritte
    Zwischenspannung ($U_{Z3}$) ergibt, die zwischen der
    zweiten Zwischenspannung ($U_{Z2}$) und der Scheitel-
    spannung ($U_S$) liegt, und daß die beiden innersten
    Einheiten (45, 46) mit Hilfe von steuerbaren Schaltern (48, 49) wechselseitig in die Reihenschaltung
    ein- und aus ihr herausschaltbar sind.

14. Wechselrichter nach einem der Ansprüche 10 bis 13
    dadurch g e k e n n z e i c h n e t , daß ein
    Mittelpunktsleiter (Mp) vorgesehen ist, der durch
    steuerbare Schalter (12; 33) abwechselnd mit dem
    Mittelpunkts-Ausgangsanschluß (34) der Reihenschaltung und den beiden Ausgangsanschlüssen (32, 37) verbindbar ist, die mit den Verbindungen zwischen jeder der
äußeren Einheiten (25, 28) und der hierzu unmittelbar
benachbarten Einheit (26, 27) verbunden sind.

15. Wechselrichter nach Anspruch 14, dadurch g e k e n n -
z e i c h n e t , daß der Mittelpunktsleiter (Mp)
in den Zeitspannen mit dem Mittelpunkts-Ausgangsanschluß (34) der Reihenschaltung verbunden ist, in denen
auch einer der drei Phasenleiter (R, S, T) mit dem
Mittelpunkts-Ausgangsanschluß (34) verbunden ist, während
der zweite Phasenleiter (R, S, T) mit dem oberen End-
Ausgangsanschluß und der dritte Phasenleiter (R, S, T)
mit dem unteren End-Ausgangsanschluß der Reihenschaltung
verbunden ist, und daß der Mittelpunktsleiter (Mp)
in den Zeitspannen, in denen zwei Phasenleiter an einem
der End-Ausgangsanschlüsse (30, 38) liegen, an dem
Ausgangsanschluß (32, 37) liegt, der mit dem anderen
Pol der betreffenden außenliegenden Einheit (25, 28)
der Gleichspannungsquellenanordnung (9) verbunden ist,
während der dritte Phasenleiter mit dem gegenüberliegenden End-Ausgangsanschluß (38, 30) verbunden ist.

16. Wechselrichter nach einem der Ansprüche 10 bis 15,
dadurch g e k e n n z e i c h n e t , daß die
Einheiten (25, 26, 27, 28), aus denen die Gleichspannungsquellenanordnung aufgebaut ist, Batterieblöcke sind.

FIG.1

0161527

0161527

# FIG.2

# FIG.3

FIG.4

FIG.5

FIG.6

| | $t_1$ | $t_2$ | $t_6$ | $t_8$ | $t_3$ | $t_9$ | $t_7$ | $t_4$ | $t_5$ |
|---|---|---|---|---|---|---|---|---|---|
| 30 | T | T,R | R | R | R | R | R | R,S | S |
| 32 | — | Mp | — | — | — | — | — | Mp | — |
| 34 | R Mp | — | T Mp | T Mp | — | S Mp | S Mp | — | R Mp |
| 37 | — | — | — | — | Mp | — | — | — | — |
| 38 | S | S | S | S | S,T | T | T | T | T |

50% $U_S$ — 25
25% $U_S$ — 26
50
11,6% $U_S$ — 45   48
von 14
11,6% $U_S$ — 46   49
51
25% $U_S$ — 27
50% $U_S$ — 28

**FIG.7**

T
R
Null
S
t

01 61 527

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | US-A-4 467 407 (ASANO u.a.)<br><br>* Spalte 5, Zeile 50 - Spalte 6, Zeile 16 * & JP - A - 58 112 476 (Kat. X)<br><br>--- | 1,7,10 ,16 | H 02 M 7/515 |
| A | US-A-4 270 163 (BAKER)<br><br>* Spalte 6, Zeile 49 - Spalte 8, Zeile 36 *<br><br>--- | 1,7,8, 10 | |
| A | US-A-3 100 851 (ROSS u.a.)<br>* Spalte 1, Zeilen 31-45; Spalte 3, Zeile 3 - Spalte 4, Zeile 6 *<br><br>----- | 1,5,10 | |
| | | | **RECHERCHIERTE SACHGEBIETE (Int. Cl.4)**<br><br>H 02 M |

Der vorliegende Recherchenbericht wurde für alle Patentansprüche erstellt.

| Recherchenort<br>DEN HAAG | Abschlußdatum der Recherche<br>05-07-1985 | Prüfer<br>KERN H. |
|---|---|---|